# EUROPEAN PATENT APPLICATION

(11) **EP 4 465 778 A1**
(43) Date of publication of application: **20.11.2024**
(21) Application number: 23216731.2
(22) Date of filing: 14.12.2023
(51) Int. Cl.: H05K 7/14, H05K 7/20

(54) **ACCURATE ESTIMATION OF DATA CENTER COOLING CAPACITY WITH A COOLING TOPOLOGY SERVICE**

(30) Priority: 17.05.2023 US 202318198559
(71) Applicant: Google LLC, Mountain View, CA 94043 (US)
(72) Inventor: KONTORINIS, Vasileios, Mountain View, 94043 (US); DONG, Wenjie, Mountain View, 94043 (US); WONG, Eehern, Mountain View, 94043 (US); EWIN, Jeffrey, Mountain View, 94043 (US); GUNCKLE, Amanda Rose, Mountain View, 94043 (US); RICE, Jeremy, Mountain View, 94043 (US); PATEL, Ravi, Mountain View, 94043 (US); WONG, Kenneth Peter, Mountain View, 94043 (US)
(74) Representative: Betten & Resch

(57) **Abstract**

The present disclosure relates to the estimating of data cooling specific to the individual location of the data centers by re-rating the performance rating of the modular cooling units. By analyzing data center specific metrics, the performance of the modular cooling units may be adjusted to account for changes in weather conditions, fan coil performance, hydraulic capacity, cold aisle temperatures, etc. All data may be provided to the user to allow for more efficient data cooling, predictions based on weather changes, and real time adjustments.

## Description

### BACKGROUND

Computing devices in data centers can produce a large amount of heat, which can cause damage to the devices if not managed properly. Data centers typically employ cooling systems, such as process water cooling loops including modular cooling units, to manage the heat generated by the computing devices. A degree of cooling to be generated by the cooling systems is estimated by evaluating fixed conditions, such as a rating in megawatts (MW) listed on a nameplate of a non-redundant modular cooling unit deployed in the process water cooling loop. However, the ratings on the nameplates may inaccurately represent the actual cooling capacity conditions or parameters of a data center can vary. The nameplate rating of the modular cooling unit further does not account for miscellaneous loads in the process cooling water loop.

### SUMMARY

The present disclosure provides for estimating cooling capacity of individual data centers based on the unique equipment deployed in each data center and a plurality of factors that may affect cooling capacity. Factors specific to the individual data center are evaluated, and modular cooling units are re-rated based on the analysis to estimate a more accurate cooling capacity.

One aspect of the disclosure provides a method for estimating cooling capacity in a data center including a cooling system comprising one or more modular cooling units. The method comprises receiving, at one or more processors, data center specific metrics based on a geographical location of the data center and parameters of the one or more modular cooling units, the parameters including a default performance rating of each modular cooling unit; determining at least one of an effective cooling capacity or maximum deployable cooling based on the data center specific metrics; determining, with the one or more processors, an updated performance rating for the modular cooling units based on at least one of the calculated effective cooling capacity or maximum deployable cooling; and generating, with the one or more processors, a data center cooling model based on the updated performance ratings.

The data center specific metrics may include fan coil performance, which may be determined based on an amount of water required to move one unit of kW thermal power. In another example, the data center specific metrics may include historical weather conditions. In some examples, the data center specific metrics include central utilities building capacity, wherein the central utilities building provides mechanical and electrical systems to the data center, and available redundant capacity, the available redundant capacity corresponding to a number of additional units that are not needed to operate the cooling system. The method may further comprise determining a maximum deployable cooling power that may be employed without violating the updated performance ratings for the modular cooling units. In some examples, the central utilities building can also provide a plumbing system.

The data center may include a process cooling water loop including the one or more modular cooling units, wherein the process cooling water loop intakes water at a first temperature and circulates the water through the data center. The data center may further include a plurality of racks lined up in alternating rows with cold air intakes facing each other in cold aisles and hot air exhausts facing each other in hot aisles, and wherein the data center specific metrics include cold aisle temperatures. The process cooling water loop may intake water at a first temperature and circulate the water through the data center, wherein the first temperature to the process cooling water loop may be adjusted to simulate a change in the cold-aisle temperature.

In some examples, the method may further comprise generating metadata related to cooling capacity of the data centers based on the data center specific metrics.

In some examples, the method may further comprise receiving, at the one or more processors via telemetry from machines in the data center, operational information for the machines; and updating in real time, with the one or more processors, the model based on the operational information.

Another aspect of the disclosure provides a system, comprising memory and one or more processors in communication with the memory. The one or more processors may be configured to receive data center specific metrics based on a geographical location of the data center and parameters of the one or more modular cooling units, the parameters including a default performance rating of each modular cooling unit; determine at least one of an effective cooling capacity or maximum deployable cooling based on the data center specific metrics; determine an updated performance rating for the modular cooling units based on at least one of the calculated effective cooling capacity or maximum deployable cooling; and generate a data center cooling model based on the updated performance ratings.

The data center specific metrics may include fan coil performance, which may be determined based on an amount of water required to move one unit of kW thermal power. In another example, the data center specific metrics may include historical weather conditions. In some examples, the data center specific metrics include central utilities building capacity, wherein the central utilities building provides mechanical and electrical systems to the data center, and available redundant capacity, the available redundant capacity corresponding to a number of additional units that are not needed to operate the cooling system. The one or more processors may be further configured to determine a maximum deployable cooling power that may be employed without violating the updated performance ratings for the modular cooling units. In some examples, the central utilities building can also provide a plumbing system.

The data center may include a process cooling water loop including the one or more modular cooling units, wherein the process cooling water loop intakes water at a first temperature and circulates the water through the data center. The data center may further include a plurality of racks lined up in alternating rows with cold air intakes facing each other in cold aisles and hot air exhausts facing each other in hot aisles, and wherein the data center specific metrics include cold aisle temperatures. The process cooling water loop may intake water at a first temperature and circulate the water through the data center, wherein the first temperature to the process cooling water loop may be adjusted to simulate a change in the cold-aisle temperature.

### DESCRIPTION OF DRAWINGS

Fig. 1 is a block diagram of an example data cooling system, according to aspects of the disclosure.
Fig. 2 is a relational block diagram of an example process cooling water loop operating across a plurality of sub buildings according to aspects of the disclosure.
Fig. 3 is a flow diagram depicting an example of using data center specific data to analyze the effective cooling capacity of individual data centers and to produce cooling equipment metadata.
Fig. 4 is a data-flow diagram illustrating a modular cooling unit re-rate calculator's determination of the individual thermal capacities of modular cooling units and the total thermal capacity of a central utilities building.
Fig. 5 is a data-flow diagram illustrating the calculation of an effective cooling capacity.
Fig. 6 is a data-flow diagram of a process water cooling capacity calculation according to aspects of the disclosure.
Fig. 7 is a component diagram illustrating an overview of the cooling data structure derived from the central utilities building, the process cooling water loop, and a low temperature process cooling water loop.
Fig. 8 is a flow diagram illustrating an overview of a cooling infrastructure domain including cooling capacities and off-floor reservations.
Fig. 9 is a line graph illustrating a fan coil water usage model.
Fig. 10 is a block diagram illustrating an example system according to aspects of the disclosure.
Fig. 11 is a flow diagram illustrating an example method of estimating data cooling.

### DETAILED DESCRIPTION

The present disclosure relates to estimating the cooling capacity of individual data centers based on the unique equipment deployed in the data centers. A system models modular cooling units in a cooling loop based on some or all of the following data center location specific metrics: count, type, and manufacturer of the modular cooling units in the process cooling water loop, miscellaneous loads in the process cooling water loop, weather conditions based on location, actual cooling equipment performance based on real time telemetry, hydraulic capacity based on water flow in gallons per minute (GPM) from cooling equipment model, probabilistic temperature excursions based on weather fluctuations over time, etc. These location specific metrics may be evaluated by examining fan coil performance, cold aisle distribution, local weather conditions, and hydraulic capacity. The location specific metrics improve the data cooling process by being evaluated to re-rate the modular cooling units.

Currently data center cooling capacity is evaluated with fixed conditions and based on the ratings in Megawatts (MW), listed on the machine's nameplate, for non-redundant modular cooling units deployed in the process cooling loop. However, when the data center is operating, conditions such as wet bulb temperature, gpm/kW water usage, and process cooling water flow rate can vary site by site which results in nameplates that inaccurately represent the actual cooling capacity of the data center. The manufacturer rating of the modular cooling units does not account for factors such as miscellaneous loads in the process cooling water loop that require cooling, weather conditions, efficiency deterioration over the lifetime of the modular cooling unit, and cold-aisle temperature distribution.

Nameplate ratings may be re-evaluated using a modular cooling unit re-rate calculator to determine a more accurate capacity of the cooling system. Current modular cooling unit re-rate calculators first import the information from the cooling equipment and adjust the thermal capacity based only on the site's local wet bulb information. By considering additional factors, a typical modular cooling unit re-rate calculator may be enhanced to apply to a larger portion of machines operative in the process cooling water loop and may provide a more accurate cooling capacity rating resulting in more efficient data center cooling.

The present disclosure provides for re-rate calculation of modular cooling units based on the modeling of the location specific metrics listed above. The location specific metrics are modeled based on the evaluation of fan coil performance, cold aisle temperatures, local weather conditions and hydraulic capacity.

Fan coil performance is based on the analysis of the fan coil water flow rate. Fan coils are cooling equipment that contain a fan and a coil to transfer heat from the data cooling floor air to the process cooling water loop. Fan coil performance is evaluated by gpm/kW indicating how much water is required to move one unit of kW thermal power. Fan coil performance is modeled by monitoring fan coil telemetry. Fan coil telemetry is calculated by determining, in real time, the difference between leaving water temperature and entering water temperature, the difference between leaving air temperature and entering air temperature, and multiplying those two values to determine the fan coil water flow rate. If the fan coil water usage is higher than anticipated based on its design capacity, then it will result in reduced effective cooling capacity and may determine any additional thermal deployable power.

Cold aisle temperature is the temperature of the alternating cold aisles in a data center. Data centers are often set up in a cold aisle/hot aisle format where the server racks are lined up in alternating rows with cold air intakes facing each other and hot air exhausts facing each other. This creates "cold aisles" where the cold air intakes are located. This is relevant to re-rating modular cooling units because the entering water temperature to the process cooling water loop may be adjusted to simulate a change in the cold-aisle temperature and better distribute temperature on the data center floor.

Previous and current local weather temperatures affect the overall cooling capacity of the data center. By having a granular understanding of local weather by the hour, the cooling capacity of the data center may be adjusted to conserve or expend more energy as needed based on the natural adjustments set by the climate. By having detailed weather data spanning over a long period of time with fine granularity, the historical weather data may be used to better predict changes throughout the year. This allows for proactive adjustments to the cooling system based on how the local temperature will likely change over time.

Hydraulic capacity is the maximum water flow rate of the cooling system that is determined by the water pump capacity, water pipe, and operation requirements. Hydraulic capacity operates as a constraint when re-rating modular cooling units. This is factored into the re-rating process by looking at hydraulic model results for on-site flow testing to indicate the maximum process cooling water flow rate that can be achieved under normal and failure operation. This is considered to avoid hydraulic shortfall and thermal runaway. Thermal runaway describes a process that is accelerated by increased temperature, in turn releasing energy that further increases temperature. Doing this also allows for the estimation of cooling module failures and the ability to plan maintenance accordingly.

The location specific metrics may be modeled to create an accurate and advanced re-rate calculator that is specific to the location of the data center and the parameters of the modular cooling units. This modeling may be presented to the user through an application programming interface. The application programming interface may also present topology information, such as the number of central utilities buildings attached to the cooling system, individual cooling plan information, and sub buildings attached to the cooling system. Further, the interface may also present capacity information relating to total number of central utilities buildings/redundant cooling plants information, cooling system total, and redundant cooling capacities aggregated from the individual cooling plant. The application programming interface may also provide information regarding off-floor cooling reservations, which is classified by all cooling equipment that is consumed in the process cooling water loop cooling capacity but is not located on the data center floor. This information is relevant because when calculating the cooling capacity, the off-floor cooling reservations should be deducted from the total central utilities building cooling capacity.

### Example Systems

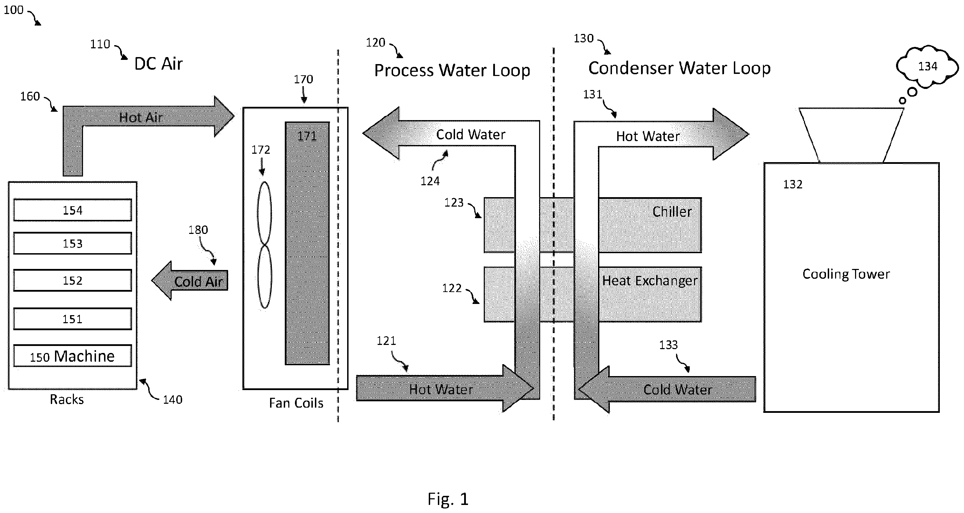

Fig. 1 is an overview of a data cooling system 100 containing direct current air 110, a process cooling water loop 120, and a condenser water loop 130. Direct current air 110 is an air conditioning system circulating chilled air through the data center floor using direct current components. On the data cooling floor, machines 150, 151, 152, 153, and 154 (150-154) consume power and generate heat. Server racks 140 may store the machines 150-154 and allow for sufficient wiring space. As shown in Fig. 1, hot air 160 produced by the machines 150-154 is rejected and processed through fan coils 170. Fan coils 170 may include a heat exchanger 171, such as an air to water heat exchanger, and a fan 172, and may be used to heat or cool a room without connecting to ductwork. A heat exchanger may allow heat from fluid, in the form of a liquid or gas, to pass to a second fluid, also in the form of a liquid or gas, without the two fluids having to mix together or come into direct contact with each other. By transferring the hot air 160 to cold water via the heat exchanger 171, cold air 180 is produced such that the fan 172 may blow cold air 180 into the data cooling floor to cool the machines 150-154. In some examples, the heat generated is directly cooled by fluid and a water-to-water heat exchanger is used to transfer heat from the data cooling floor to the cooling water.

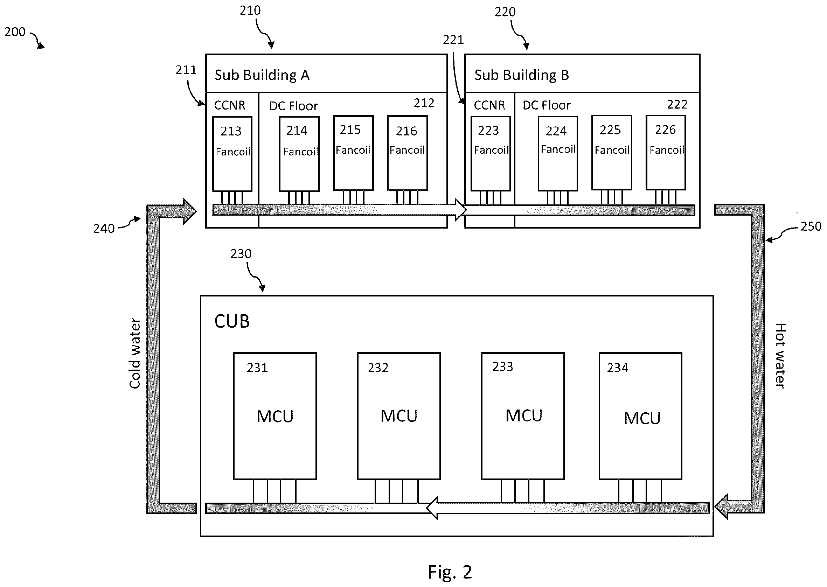

The process cooling water loop 120 is a closed-loop water distribution system that carries away heat, by hot water 121, from the data cooling floor to the condenser water loop 130 through a heat exchanger 122 and/or chiller 123. The process cooling water loop removes unwanted heat by converting hot water 121 from the fan coils 170 into cold water 124 for the fan coils 170 so that cold air 180 may be blown into the data cooling floor. See Fig. 2 for a more detailed description of the process cooling water loop 120.

The condenser water loop 130 transfers hot water 131 from the chiller 123 to be processed by a cooling tower 132 to provide cold water 133 to the heat exchanger 122. The condenser water loop 130 may be an open-loop or a closed-loop system depending on site requirements. In an open-loop application, the condenser water carries away the heat from the process cooling water loop 120 to the cooling tower 132 to reject heat to the atmosphere via water evaporation 134. For a closed-loop application, the heat is rejected from the condenser water to the atmosphere by sensible heat transfer through a dry cooler. A chiller 123 may lower the temperature of machinery, industrial spaces, and process fluids by removing heat from the system and transferring it elsewhere. The heat exchanger 122 may facilitate the process of heat exchange between two fluids that are at different temperatures. The direct current air 110, process cooling water loop 120, and condenser water loop 130 all work together to maintain the temperature of the data cooling center.

Fig. 2 is an example of a process cooling water loop 200 that runs through two sub buildings 210, 220 and a central utilities building 230 including modular cooling units 231, 232, 233, 234 (231-234). A central utilities building 230 is a place where the equipment for operation systems, e.g. cooling, mechanical, electrical, plumbing systems, etc., are centered to service other buildings or areas. In the example shown in Fig. 2, the central utilities building 230 provides the cooling water supply to the rest of the process cooling water loop through the modular cooling units 231-234 to cool Sub Building A 210 and Sub Building B 220. The sub buildings 210, 220 shown in the example of Fig. 2 include central campus network rooms (CCNR) 211, 221 and data cooling floors 212, 222, each of which further include fan coils 213, 214, 215, 216 (213-216), 223, 224, 225, 226 (223-226). Central campus network rooms 211, 221 are the center of the data centers that provide connectivity to all servers and systems across the data center.

Although only two sub buildings 210, 220 are shown in Fig. 2 the central utilities building (CUB) 230 may provide the cooling water supply 240 to more sub buildings or areas. For example, the process cooling water loop may also support some non-computing or non-data-storage loads such as additional central campus network rooms, fan coils, low temperature chillers, etc. In the example shown in Fig. 2, the process cooling water loop 200 operates as a closed loop system where the cooling water supply 240 enters the sub buildings 210 220 where it is processed through fan coils 213-216, 223-226 to cool the central campus network rooms 211, 221 and data center floors 212, 222. This produces hot water 250 which reenters the central utilities building 230 for the modular cooling units 231-234 to process.

The data center floors 212 222 may be set up in a cold aisle/hot aisle format where the server racks are lined up in alternating rows such that the cold air intakes of the machines face each other, and the hot air exhausts face each other. The cold aisle/hot aisle format creates separate temperatures per aisle that may be measured and analyzed for its effect on the data cooling estimates.

The modular cooling units 221-224 are machines that collaboratively supply the cooling water supply 240, where each modular cooling unit has a nominal nameplate rating indicating the design cooling capacity it may support. The nominal nameplate capacity is based on site agnostic design day conditions which are expected to exceed a predetermined percentage, e.g., 0.4%, of the year. The nominal nameplate capacity is generally based on the worst-case interface requirement for all potential data center locations. The modular cooling units 231-234 may be classified into two categories based on their purpose: 'N' modular cooling units and redundant modular cooling units. The purpose of 'N' modular cooling units is to provide continuously stable cooling water to the data center, which is sometimes referred to as the critical capacity. The redundant modular cooling units are the backup units that provide cooling water when there is an issue that causes the 'N' modular cooling units to fail to function properly.

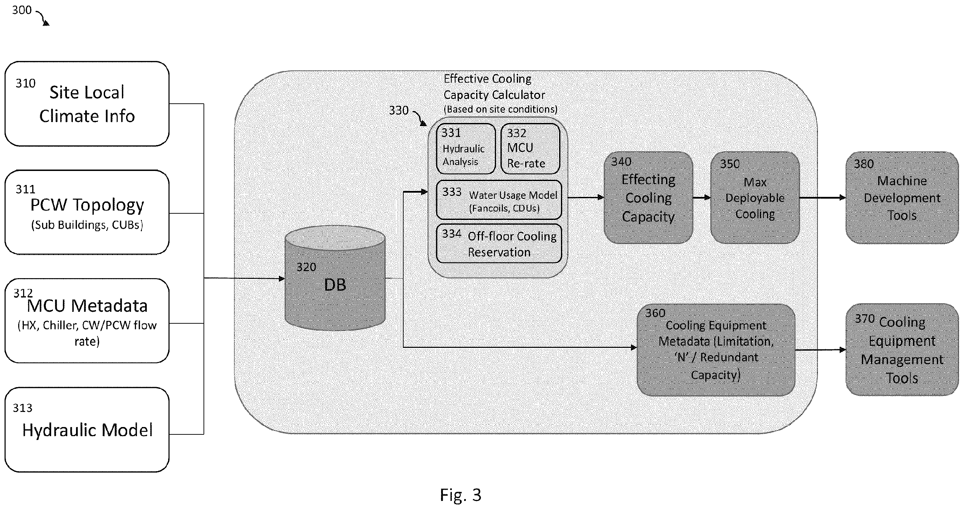

Fig. 3 is an overview 300 illustrating use of data center specific data which may be collected to analyze the effective cooling capacity of individual data centers and to produce cooling equipment metadata. In the example shown in Fig. 3 the following location specific metrics are collected from the individual data centers: site local climate information 310, process cooling water (PCW) topology 311, modular cooling unit metadata 312, and hydraulic model 313. The disclosure is not limited to the location specific metrics presented here and more metrics may be collected to analyze cooling capacity, for example, fan coil performance and cold aisle temperatures may also be collected.

Site local climate information 310 may be used to evaluate thermal capacity by reading from the wet bulb temperature information. Previous and current local weather temperatures affect the overall cooling capacity of the data center. A granular understanding of local weather by the hour allows for the cooling of the data center to be adjusted to conserve or expend more energy as needed based on the natural changes in the environment. This data, spanning over a long period of time with fine granularity, allows for the cooling capacity of a data center to be predicted throughout the year and proactive adjustments to be enacted.

Process cooling water loop topology may refer to a number of sub buildings and central utilities buildings to which cooling is supplied. Modular cooling unit (MCU) metadata may include a nominal thermal capacity, chiller brand, chiller nominal capacity, and cooling water/process cooling water flow rate.

The hydraulic model estimates the maximum process cooling water loop flow rate of the modular cooling unit. The hydraulic capacity is the maximum water flow rate of the cooling system that is determined by the water pump capacity, water pipe specifications, and operation requirements. Hydraulic capacity operates as a constraint to cooling capacity and is relevant to re-rating modular cooling units. The hydraulic model results for on-site flow testing indicates the maximum process cooling water flow rate that can be achieved under normal and failure operation. This is considered to avoid hydraulic shortfall and thermal runaway.

Once the data center specific data is collected, it may be entered into a database 320 operating as a centralized storage for the collected data. The data may be input into an effective cooling capacity calculator 330 to calculate the effective cooling capacity 340 and maximum deployable cooling 350. The effective cooling capacity calculator 330 uses the following information from the individual data centers: hydraulic analysis 331, the modular cooling unit re-rate 332, the water using model 334, and the off-floor cooling reservation 335. Once the effective cooling capacity 340 is determined, the maximum deployable cooling 350 may be decided from the effective cooling capacity calculator 330 and may be input into machine deployment tools380. The data may also be compiled as cooling equipment metadata 360 for cooling equipment management tools 370.

The modular cooling unit re-rate is based on the modeling of location specific metrics. Some or all of the location specific metrics may be modeled to create an accurate and advanced re-rate calculator that is specific to the location of the data center and the parameters of the modular cooling units. This modeling may be presented to a user through an application programming interface. The application programming interface (API) may also present e.g., through GET and/or POST requests to the API, topology information, such as the number of central utilities buildings attached to the cooling system, individual cooling plan information, and sub buildings attached to the cooling system. Further, the interface may also present capacity information relating to total number of central utilities buildings/redundant cooling plants information, cooling system totals, and redundant cooling capacities aggregated from the individual cooling plant. The application programming interface may also provide information regarding off-floor cooling reservations, which is relevant because when calculating the cooling capacity, off-floor cooling reservations should be deducted from the total central utilities building cooling capacity.

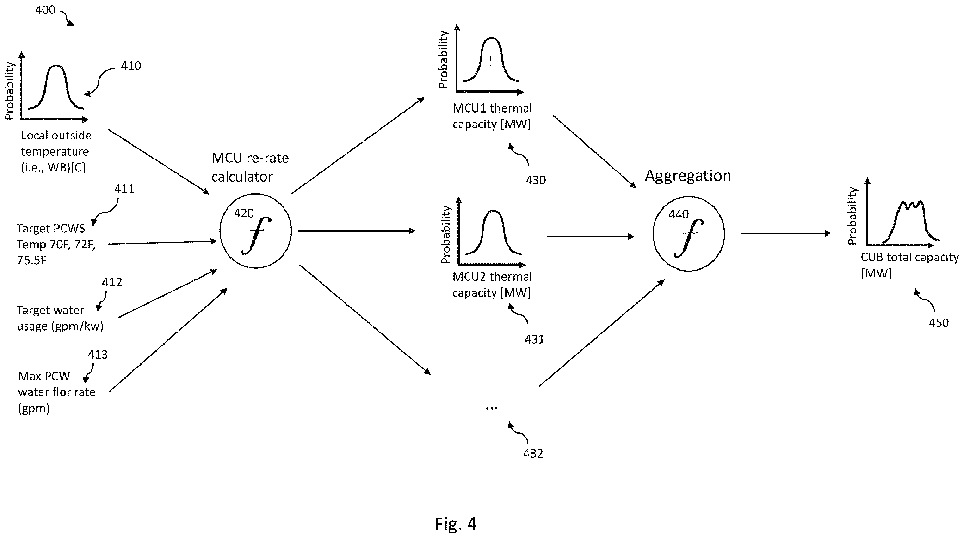

Fig. 4 is an example of determining central utilities building total cooling capacity 400 by using the modular cooling unit re-rate calculator 420 which may then be used in the effective cooling capacity calculator 330. In this example location specific metrics such as local outside temperature 410, target process cooling water service temperature 411, target water usage (gpm/kW) 412, and maximum process cooling water flow rate (gpm) 413 are input into a modular cooling unit re-rate calculator 420 to determine thermal capacity of a plurality of individual modular cooling units 430-432. The disclosure is not limited to the factors shown in Fig. 4 and a plurality of additional or alternative factors may be measured and input in the modular cooling unit re-rate calculator, for example, machine power utility and coolant distribution unit deployment may also affect the re-rate of modular cooling units. The individual modular cooling unit thermal capacities are aggregated 440 to determine the total central utilities building total cooling capacity model 450. The determination of the modular cooling units' thermal capacity 430-432 and the total central utilities building cooling capacity model 450 are utilized to determine the effective cooling capacity 340 of individual data centers, as shown in Fig. 3.

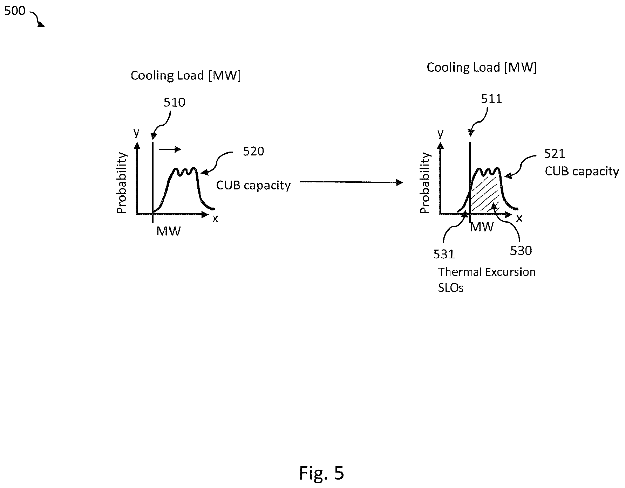

Fig. 5 is an example of an effective cooling capacity calculation 500. The calculation begins by assuming a fixed cooling load 510-511 indicated by a vertical line on the graph starting from the minimum central utilities building cooling capacity 510 and simulating the increase of the cooling load along the x-axis. The resulting curve 521 represents the central utilities capacity distribution, where the area under the curve, split by a vertical line 511 represents the effective cooling capacity of the central utilities building. The area under the curve to the right of the vertical line 530 represents the cumulative probability that the central utilities building cooling capacity can support the cooling load. The area under the curve to the left of the vertical line 531 represents the cumulative probability of cooling capacity that is lower than the cooling load, otherwise known as thermal excursion. The vertical line 511 stops moving along the x-axis, or the cooling load stops increasing, when the area under the curve to the right of the vertical line 530 is lower than the last approved thermal excursion policy such that the latest valid cooling load will be the effective cooling capacity. The area under the curve to the right of the vertical line 530 therefore indicates the thermal excursion service level objective which is the target value or range of values of thermal excursion.

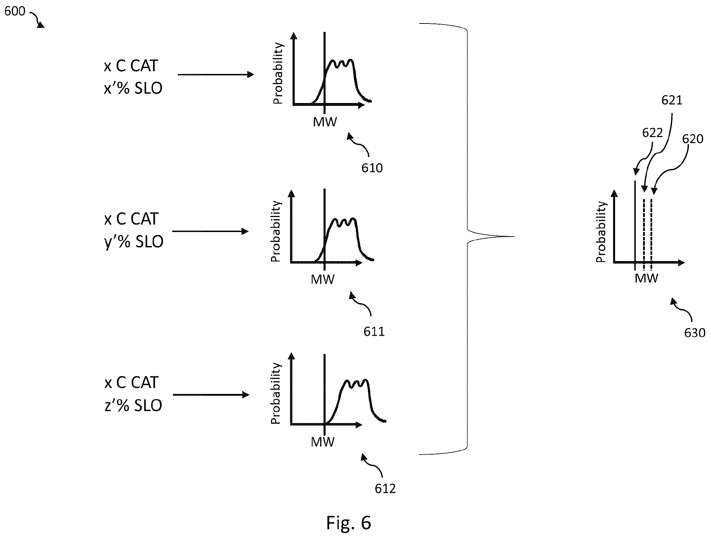

Fig. 6 is an example of a process water cooling capacity calculation 600. The graphs to the left 610-612 each represent a different combination of cold aisle temperature and service level objective target percentages. Different cold aisle temperatures have different central utilities building capacity ratings. As shown in Fig. 6, the effective cooling capacity model 630 is calculated based on each combination of cold aisle temperature and service level objective target percentages. The dotted vertical lines 620-622 represent resulting effective cooling capacities from the inputted combinations. The solid vertical line represents the smallest effective cooling capacity which is deemed the process water cooling capacity. This represents the process water cooling capacity before any off-floor reservations are removed, but with the assumption of an IT interface specification.

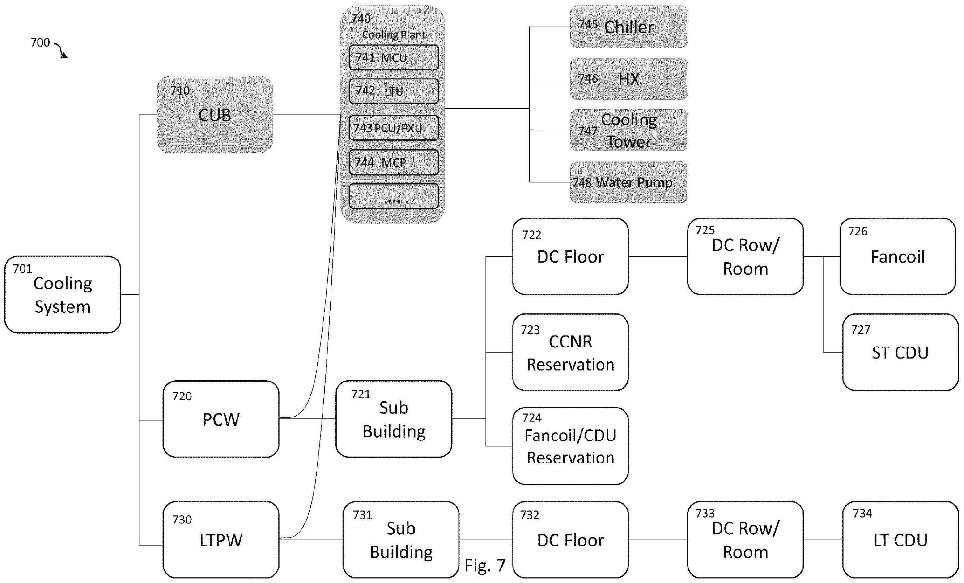

Fig. 7 is an example of an overview of the cooling data structure 700. The cooling system 701 is made up of a central utilities building, a process cooling water loop, and low temperature process water. Blocks 710, 740, and 745, 746, 747, 748 (745-748) represent cooling equipment that is physically installed to provide cooling capacity for the process cooling water loop 720 and/or low temperature process water (LTPW) 730 and their components. Low temperature process water 730 is a subset of the process cooling water loop 720 that has the same domain of the process cooling water loop 720. Therefore, a process cooling water loop 720 may have multiple low temperature process cooling water loops 730.

Although only one central utilities building 710 is shown in Fig. 7, there may be multiple central utilities buildings attached to the same cooling system. Within the central utilities buildings there may be multiple cooling plants 740 installed. The cooling plant 740 is an abstraction of the different cooling equipment, the most common being a modular cooling unit 741, however, the cooling equipment may also be, for example, a laser transceiver unit 742, precise control units/peripheral expansion unit 743, modular central plant 744, etc. The cooling plant may also be connected to components such as a chiller 745, a heat exchanger (HX) 746, a cooling tower 747 and a water pump 748.

Blocks 720, 721, 722, 723, 724, 725, 726, 727 (720-727), 730, 731, 732, 733, 734 (730-734) represent how the different cooling capacities from the individual cooling plants may be arranged with the cooling capacity delivery topology to the data cooling floor. The process cooling water 720 and/or low temperature process water 730 may be directly connected to the cooling plants. As such, it may be compatible in a situation where there is a mixed cooling plant deployment within a central utilities building 710. Each process cooling water 720 and/or low temperature process water 730 loop may have their own sub-set of sub buildings 721, 731 in case of the scenario where different loops have different cooling domains. For each sub building, the data structure may contain the off-floor cooling capacity reservation and the cooling equipment on the data cooling floor.

In the example shown in Fig. 7 the process cooling water loop is connected to one or more sub buildings 721. Said sub buildings 721 may include data cooling floors 722, central campus network room reservations 723, and fan coil/cooling distribution unit reservations 724. The data cooling floor may include data cooling rows/rooms 725 which may contain fan coils 726 and/or ST cooling distribution units 727.

The low temperature process cooling water loop may also contain sub buildings 731 which may include data cooling floors 732. The data cooling floor may include data cooling rows/rooms 733 which may contain low temperature (LT) cooling distribution units 734.

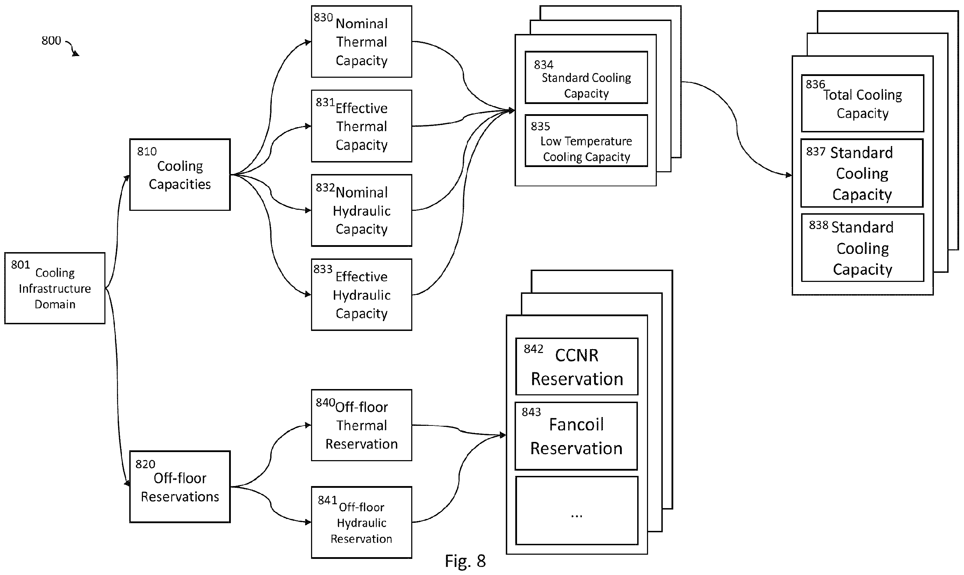

Fig. 8 is an overview of an example cooling infrastructure 800. The cooling infrastructure domain 801 into two parts: cooling capacities 810 and off-floor reservations 820. The cooling capacity is defined by at least two cooling equipment characteristics: thermal capacity (kW) 830-831 and hydraulic capacity (gpm) 832-833. Thermal capacity 830-831 may be calculated by the physical first principles with physical variables, e.g. fluid temperature, volume, speed, etc. Hydraulic capacity 832-833 is the maximum water flow rate of the cooling system since the media to carry heat from the data center server hall to the atmosphere is water. Hydraulic capacity is determined by the water pump capacity, water pipe, and operation requirements.

The cooling capacities may include nominal thermal capacity 830, effective thermal capacity 831, nominal hydraulic capacity 832, and effective hydraulic capacity 833. These capacities are used to determine standard cooling capacity 834 and low temperature cooling capacity 835, which leads to a resulting total cooling capacity 836 and a plurality of standard cooling capacities 837-838.

The off-floor reservations may include off-floor thermal reservations 840 and off-floor hydraulic reservations 841 which leads to determinations of central campus network rooms 842, fan coil reservations 843, etc. The off-floor cooling reservations is all of the cooling equipment that consumes the process cooling water cooling capacity but is not on the data cooling floor. The off-floor cooling reservations may be tracked by the thermal aspect or the hydraulic aspect of the reservations such that when calculating the cooling capacity, the off-floor data should be deducted from the total central utilities building cooling capacity.

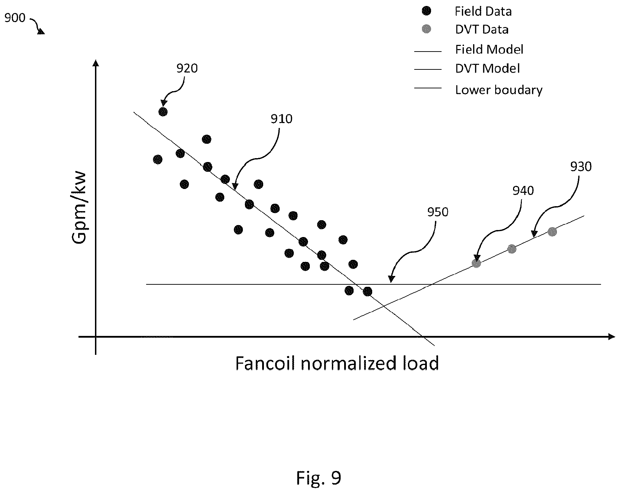

Fig. 9 is an example of a fan coil water usage model. The model displays field data 920, design verification testing (DVT) data 940, field model 910, DVT model 930 and a lower boundary 950. DVT model is the data provided by fan coil manufacturers or the lab tested data. The field water usage model and the DVT model are monotonic functions. The lower boundary functions as a guard to protect the estimated water usage. The lower boundary value is determined as the best gpm/kW value from the field data.

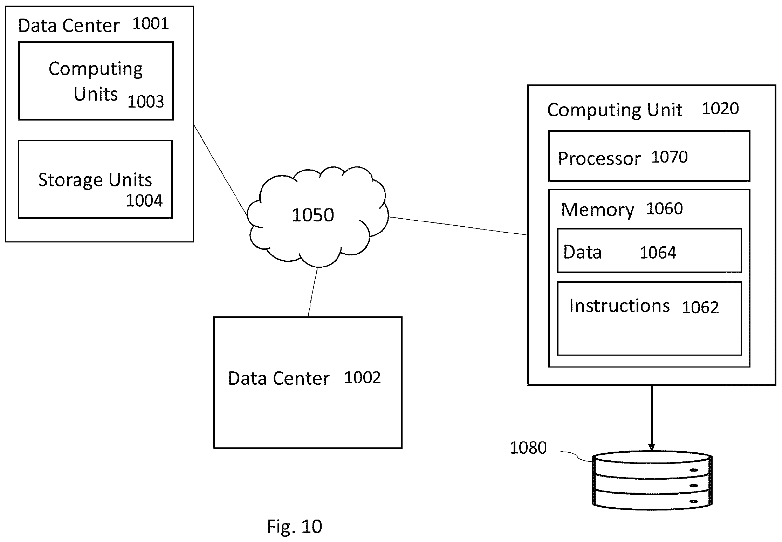

Fig. 10 illustrates an example system for estimating data center cooling based on data center location specific metrics. In particular, the system includes one or more computing units 1020 configured to receive data from one or more individual data centers 1001, 1002 through a network 1050. For example, the data received from the data centers 1001, 1002 may include cold aisle temperatures, fan coil performance, hydraulic analysis, etc. The computing unit 1020 may determine the thermal capacity of each modular cooling unit used to cool the one or more individual data centers 1001, 1002, the thermal capacity of a central utilities building, potential local weather temperature, etc.

The computing unit 1020 includes one or more processors 1070. The processors 1070 can be any conventional processors, such as commercially available CPUs. Alternatively, the processors can be dedicated components such as an application specific integrated circuit ("ASIC") or other hardware-based processor. Although not necessary, the computing unit 1020 may include specialized hardware components to perform specific computing processes.

The memory 1060 can store information accessible by the processor 1070, including instructions 1062 that can be executed by the processor 1070 and that can be retrieved, manipulated or stored by the processor 1070.

The instructions 1062 can be a set of instructions executed directly, such as machine code, or indirectly, such as scripts, by the processor 1070. In this regard, the terms "instructions," "steps," and "programs" can be used interchangeably herein. The instructions 1062 can be stored in object code format for direct processing by the processor 1070, or other types of computer language including scripts or collections of independent source code modules that are interpreted on demand or compiled in advance. Functions, methods, and routines of the instructions are explained in more detail in the foregoing examples and the example methods below.

The data 1064 can be retrieved, stored or modified by the processor 1070 in accordance with the instructions. The data can also be formatted in a computer-readable format such as, but not limited to, binary values, ASCII or Unicode. Moreover, the data can include information sufficient to identify relevant information, such as numbers, descriptive text, proprietary codes, pointers, references to data stored in other memories, including other network locations, or information that is used by a function to calculate relevant data.

Although Fig. 10 functionally illustrates the processor, memory, and other elements of computing unit 1020 as being within the same block, the processor, computer, computing device, or memory can actually comprise multiple processors, computers, computing devices, or memories that may or may not be stored within the same physical housing. For example, the memory can be a hard drive or other storage media located in housings different from that of the computing unit 1020. Accordingly, references to a processor, computer, computing device, or memory will be understood to include references to a collection of processors, computers, computing devices, or memories that may or may not operate in parallel. For example, the computing unit 1020 may include server computing devices operating as a load-balanced server farm, distributed system, etc. Yet further, although some functions described below are indicated as taking place on a single computing device having a single processor, various aspects of are indicated as taking place on a single computing device having a single processor, various aspects of the subject matter described herein can be implemented by a plurality of computing devices for example, communicating information over a network.

The memory 1060 can store information accessible by the processor 1070, including instructions 1062 that can be executed by the processor 1070. Memory can also include data 1064 that can be retrieved, manipulated, or stored by the processor 1070. The memory 1060 may be a type of non-transitory computer readable medium capable of storing information accessible by the processor 1070, such as a hard-drive, solid state drive, tape drive, optical storage, memory card, ROM, RAM, DVD, CD-ROM, write-capable, and read-only memories. The processor 1070 can be a well-known processor or other lesser-known types of processors. Alternatively, the processor 1070 can be a dedication controller such as an ASIC.

The instruction 1062 can be a set of instruction executed directly, such as machine code, or indirectly, such as scripts, by the processor 1070. In this regard, the terms "instruction," "steps," and "programs" can be used interchangeably herein. The instructions 1062 can be stored in object code format for direct processing by the processor 1070, or other types of computer language including scripts or collection of independent source code modules that are interpreted on demand or compiled in advance. The instruction 1062 may be executed to identify data center location specific metrics that may be used to estimate the data cooling capacity of the data center. The instructions 1062 may further be executed to calculate the estimated data cooling capacity of the data center based on the identified data center location specific metrics.

The data 1064 can be retrieved, stored or modified by the processor 1070 in accordance with the instructions 1062. For instance, although the system and method is not limited by a particular data structure, the data 1064 can be stored in computer registers, in a relational database as a table having a plurality of different fields and records, or XML documents. The data 1064 can also be formatted in a computer-readable format such as, but not limited to, binary values, ASCII or Unicode. Moreover, the data 1064 can include information sufficient to identify relevant information, such as numbers, descriptive text, proprietary codes, pointers, references to data stored in other memories, including other network locations, or information that is used by a function to calculate relevant data.

The computing unit 1020 may be further coupled to external storage 1080, such as a database. While the external storage 1080 can include multiple storage devices, wherein such multiple devices may be in communication with each other such as in a distributed storage system.

Further to the example systems described above, example methods are now described. Such methods may be performed using the systems described above, modifications thereof, or any of a variety of systems having different configurations. It should be understood that the operations involved in the methods herein need not be performed in the precise order described. Rather, various operations may be handled in a different order, or simultaneously, and operations may be added or omitted.

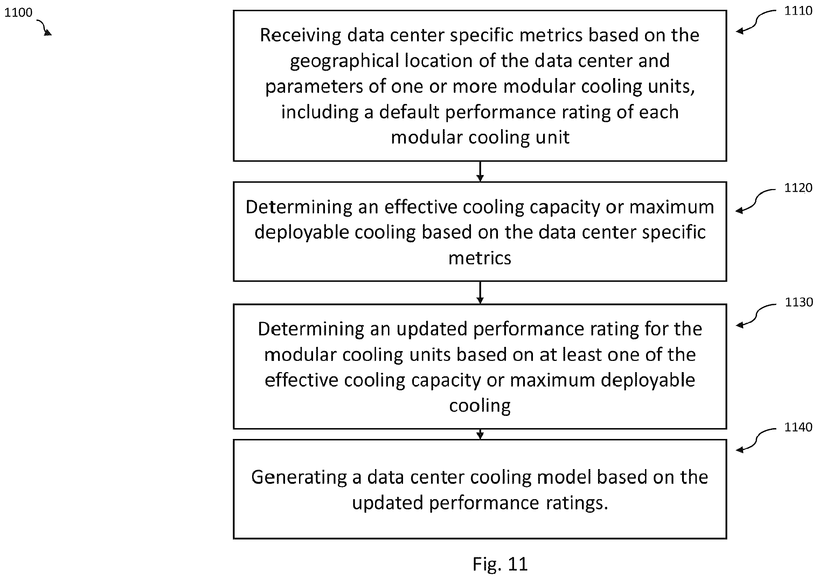

Fig. 11 illustrates an example method of estimating data cooling of individual data centers 1100. While the operations are described in a particular order, it should be understood that the order may be modified. Moreover, operations may be performed simultaneously, and operations may be added or omitted.

In block 1110, the user received data center specific metrics based on the geographical location of the data center. These data center specific metrics may include, fan coil performance, fan coil telemetry, cold aisle temperatures, current local weather temperature, past local weather temperature, hydraulic capacity, etc. The data center specific metrics may also include parameters of one or more modular cooling units located in the data center, including a default performance rating unique to each modular cooling unit. Each of the location specific metrics are modeled for the user.

In block 1120 the effective cooling capacity or maximum deployable cooling is determined based on the data specific metrics. The effective cooling capacity and maximum deployable cooling may be determined based on the user data specific metrics including number of sub buildings, number of central utilities buildings, number of off-floor cooling reservations, hydraulic capacity, etc. For example, a modular cooling unit re-rate calculator may be used to calculate individual modular cooling unit cooling capacity distribution based on local weather, equipment and operating conditions. Effective cooling capacity may be computed by adjusting a cooling load relative to a central utilities building capacity. For example, the cooling load may start at a minimum capacity and then be increased. Increasing of the cooling load may stop when the cooling load reaches a critical value where a cumulative probability that the central utilities building cooling capacity can support the load is lower than a latest approved thermal excursion policy. A value less than this critical value for the cooling load may be selected and used for the modular cooling units, despite nameplate ratings that may list a lower maximum cooling load.

In block 1130 an updated performance rating is determined for each modular cooling unit based on at least one of the effective cooling capacity or maximum deployable cooling. The updated performance rating is a more accurate representation of the cooling capacity of the data center in comparison to the default performance rating provided by the manufacturer. This is due to the consideration of the data center specific metrics which may affect modular cooling unit performance. By updating the performance rating, the data center may operate at a more efficient cooling capacity and to be able to better predict cooling capacity changes throughout the year.

In block 1140, a data center cooling model based on the updated performance rating is generated. According to some examples, the updated performance rating may be provided to a user, such as through an API or user interface. The user may adjust the data center cooling capacities. In other examples, a computing unit may use the updated performance rating to automatically adjust the data center cooling capacities in real time and to anticipate cooling changes in the future based on past performance.

The present disclosure allows for a more accurate and detailed estimation of data center cooling. Due to the granular collection of data center location specific metrics, data center cooling estimation may be performed in a way such that changes may be predicted to account for seasonal shifts and unique system configurations that are specific to each data center. Since the present disclosure does not rely on manufacturer determined modular cooling unit parameters, the upkeep and replacement of such machines may be optimized for longevity and accuracy. Further, the disclosure herein allows a client to have a detailed analysis of each factor which may affect the temperature of individual data centers.

Another aspect disclosed herein relates to the estimating of data cooling specific to the individual location of the data centers by re-rating the performance rating of the modular cooling units. By analyzing data center specific metrics, the performance of the modular cooling units may be adjusted to account for changes in weather conditions, fan coil performance, hydraulic capacity, cold aisle temperatures, etc. All data may be provided to the user to allow for more efficient data cooling, predictions based on weather changes, and real time adjustments

While the present disclosure is described in relation with data center cooling, it is not limited to same. The method described herein may be used to estimate the cooling of a plurality of other controlled areas that may be affected by similar location specific metrics. For example, the techniques described in the present disclosure may be applied to the infrastructure for the cooling of heat sensitive products such as meat, wine, produce, and other perishable food products. Another example includes the cooling of pharmaceutical products and machines where maintenance of specific temperatures is desired. Additional examples of temperature sensitive products which may require cooling estimation applications include cologne, seeds, makeup, artwork, candles, flowers, and textiles.

Conditional language used herein, such as, among others, "can," "might," "may," "e.g.," and the like, unless specifically stated otherwise, or otherwise understood within the context as used, is generally intended to convey that certain examples include, while other examples do not include, certain features, elements and/or states. Thus, such conditional language is not generally intended to imply that features, elements and/or states are in any way required for one or more aspects or that one or more aspects necessarily include logic for deciding, with or without author input or prompting, whether these features, elements and/or states are included or are to be performed in any particular example. The terms "comprising," "including," "having," and the like are synonymous and are used inclusively, in an open-ended fashion, and do not exclude additional elements, features, acts, operations, and so forth. Also, the term "or" is used in its inclusive sense (and not in its exclusive sense) so that when used, for example, to connect a list of elements, the term "or" means one, some, or all of the elements in the list.

While the above detailed description has shown, described, and pointed out features as applied to various examples, it will be understood that various omissions, substitutions, and changes in the form and details of the machines or methods illustrated can be made without departing from the scope of the disclosure. As will be recognized, certain examples described herein can be embodied within a form that does not provide all of the features and benefits set forth herein, as some features can be used or practiced separately from others.

Unless otherwise stated, the foregoing alternative examples are not mutually exclusive, but may be implemented in various combinations to achieve unique advantages. As these and other variations and combinations of the features discussed above can be utilized without departing form the subject matter defined by the claims, the foregoing description should be taken by way of illustration rather than by way of limitation of the subject matter define by the claims. In addition, the provision of the examples described herein, as well as clauses phrased as "such as", "including" and the like, should not be interpreted as limiting the subject matter of the claims to the specific examples; rather, the examples are intended to illustrate only one of many possible examples. Further, the same reference numbers in different drawings can identify the same or similar elements.

## Claims

1. A method for estimating cooling capacity in a data center including a cooling system comprising one or more modular cooling units, the method comprising:
receiving, at one or more processors, data center specific metrics based on a geographical location of the data center and parameters of the one or more modular cooling units, the parameters including a default performance rating of each modular cooling unit;
determining at least one of an effective cooling capacity or maximum deployable cooling based on the data center specific metrics;
determining, with the one or more processors, an updated performance rating for the modular cooling units based on at least one of the determined effective cooling capacity or maximum deployable cooling; and
generating, with the one or more processors, a data center cooling model based on the updated performance ratings.

2. The method of claim 1, wherein the data center specific metrics include fan coil performance, and wherein optionally the fan coil performance is determined based on an amount of water required to move one unit of kW thermal power.

3. The method of claim 1 or 2, wherein the data center specific metrics include historical weather conditions.

4. The method of any one of claims 1 to 3, wherein the data center comprises a process cooling water loop including the one or more modular cooling units, wherein the process cooling water loop intakes water at a first temperature and circulates the water through the data center, and wherein optionally the data center comprises a plurality of racks lined up in alternating rows with cold air intakes facing each other in cold aisles and hot air exhausts facing each other in hot aisles, and wherein the data center specific metrics include cold aisle temperatures.

5. The method of claim 4, wherein the data center comprises a process cooling water loop including the one or more modular cooling units, wherein the process cooling water loop intakes water at a first temperature and circulates the water through the data center, wherein the first temperature to the process cooling water loop may be adjusted to simulate a change in the cold aisle temperature.

6. The method of any one of claims 1 to 5, wherein the data center specific metrics include central utilities building capacity, wherein the central utilities building provides mechanical and electrical systems to the data center, and available redundant capacity, the available redundant capacity corresponding to a number of additional units that are not needed to operate the cooling system, and optionally further comprising determining a maximum deployable cooling power that may be employed without violating the updated performance ratings for the modular cooling units.

7. The method of any one of claims 1 to 6, further comprising generating metadata related to cooling capacity of the data centers based on the data center specific metrics.

8. The method of any one of claims 1 to 7, further comprising:
receiving, at the one or more processors via telemetry from machines in the data center, operational information for the machines; and
updating in real time, with the one or more processors, the data center cooling model based on the operational information.

9. A cooling system, comprising:
memory; and
one or more processors in communication with the memory, the one or more processors configured to:
receive data center specific metrics based on a geographical location of the data center and parameters of one or more modular cooling units, the parameters including a default performance rating of each modular cooling unit;
determine at least one of an effective cooling capacity or maximum deployable cooling based on the data center specific metrics;
determine an updated performance rating for the modular cooling units based on at least one of the determined effective cooling capacity or maximum deployable cooling; and
generate a data center cooling model based on the updated performance ratings.

10. The system of claim 9, wherein the data center specific metrics include fan coil performance, and wherein optionally the fan coil performance is determined based on an amount of water required to move one unit of kW thermal power.

11. The system of claim 9 or 10, wherein the data center specific metrics include historical weather conditions.

12. The system of any one of claims 9 to 11, wherein the data center comprises a process cooling water loop including the one or more modular cooling units, wherein the process cooling water loop intakes water at a first temperature and circulates the water through the data center, and wherein optionally the data center comprises a plurality of racks lined up in alternating rows with cold air intakes facing each other in cold aisles and hot air exhausts facing each other in hot aisles, and wherein the data center specific metrics include cold aisle temperatures.

13. The system of claim 12, wherein the data center comprises a process cooling water loop including the one or more modular cooling units, wherein the process cooling water loop intakes water at a first temperature and circulates the water through the data center, wherein the first temperature to the process cooling water loop may be adjusted to simulate a change in the cold aisle temperature.

14. The system of any one of claims 9 to 13, wherein the data center specific metrics include central utilities building capacity, wherein the central utilities building provides mechanical and electrical systems to the data center, and available redundant capacity, the available redundant capacity corresponding to a number of additional units that are not needed to operate the cooling system.

15. The system of claim 14, further comprising determining a maximum deployable cooling power that may be employed without violating the updated performance ratings for the modular cooling units.
